(19) Europäisches Patentamt
European Patent Office
Office européen des brevets

(11) **EP 1 687 603 B1**

(12) **FASCICULE DE BREVET EUROPEEN**

(45) Date de publication et mention
de la délivrance du brevet:
**07.01.2009 Bulletin 2009/02**

(51) Int Cl.:
***G01M 11/00*** (2006.01)

(21) Numéro de dépôt: **03799700.4**

(22) Date de dépôt: **27.11.2003**

(86) Numéro de dépôt international:
**PCT/FR2003/050140**

(87) Numéro de publication internationale:
**WO 2005/064306 (14.07.2005 Gazette 2005/28)**

(54) **PROCEDES DE MESURE OU DE COMPARAISON NON DESTRUCTIFS DE LA TENUE AU FLUX LASER DE COMPOSANTS OPTIQUES**

VERFAHREN ZUM ZERSTÖRUNGSFREIEN MESSEN ODER VERGLEICHEN EINES LASERSTRAHLUNGSINHALTS IN OPTISCHEN KOMPONENTEN

METHOD FOR NON-DESTRUCTIVE MEASUREMENT OR COMPARISON OF A LASER RADIATION CONTENT IN OPTICAL COMPONENTS

(84) Etats contractants désignés:
**GB**

(43) Date de publication de la demande:
**09.08.2006 Bulletin 2006/32**

(73) Titulaire: **COMMISSARIAT A L'ENERGIE ATOMIQUE**
**75015 Paris (FR)**

(72) Inventeurs:
• **BIGARRE, Janick**
**F-37000 Tours (FR)**
• **HOURQUEBIE, Patrick**
**F-37320 Esvres (FR)**
• **DOUCET, Ludovic**
**F-37190 Villaine Les Rochers (FR)**

(74) Mandataire: **Poulin, Gérard et al**
**Brevalex**
**3, rue du Docteur Lancereaux**
**75008 Paris (FR)**

(56) Documents cités:
• **BIGARRE J ET AL: "Trapping of electrical charges and laser damage" PROC. SPIE - INT. SOC. OPT. ENG. (USA), PROCEEDINGS OF THE SPIE - THE INTERNATIONAL SOCIETY FOR OPTICAL ENGINEERING, 2003, SPIE-INT. SOC. OPT. ENG, USA, vol. 4932, mai 2003 (2003-05), pages 258-267, XP002289327 ISSN: 0277-786X**
• **KOZLOWSKI M R, BATTERSBY C L, DEMOS S G: "Luminescence Investigation of SiO2 Surfaces Damaged by 0.35 mm Laser Illumination" SPIE, vol. 3902, 2000, pages 138-144, XP002289328**
• **GOLDBERG M, TRUKHIN A, FITTING H-J: "Dose effects of cathodoluminescence in SiO2 layers on Si" MATERIALS SCIENCE AND ENGINEERING B, vol. 42, 1996, pages 293-296, XP002289329**
• **STEVENS KALCEFF M A: "Cathodoluminescence michrocharacterization of the defect structure of irradiated hydrated and anhydrous fused silicon dioxide" PHYSICAL REVIEW B, vol. 57, no. 10, 1 mars 1998 (1998-03-01), pages 5674-5683, XP002289330**
• **REICHLING M: "Nanosecond UV laser pulse interactions with dielectric single crystals" PROC. SPIE - INT. SOC. OPT. ENG. (USA), PROCEEDINGS OF THE SPIE - THE INTERNATIONAL SOCIETY FOR OPTICAL ENGINEERING, 1998, SPIE-INT. SOC. OPT. ENG, USA, vol. 3274, 1998, pages 2-9, XP002289331 ISSN: 0277-786X**

**Description**

**DOMAINE TECHNIQUE**

L'invention se situe dans le domaine des procédés de mesure ou de comparaison non destructifs de la tenue au flux laser de composants optiques.

**ETAT DE LA TECHNIQUE ANTERIEURE**

Le passage d'un fort flux laser à travers les composants de la chaîne d'un laser de très forte puissance (verres laser, polariseurs, miroirs, couches minces, cristaux, hublots, etc.), ou plus généralement de tout composant optique, provoque l'apparition de dommages en volume ou en surface des composants qui dégradent progressivement les caractéristiques du faisceau.

La tenue au flux laser des matériaux constituant des composants optiques est déterminée généralement en effectuant des tirs laser sur un échantillon et en notant la variation de certains paramètres optiques (diffusion, absorption... ) ou en observant directement l'apparition de dommages microscopiques en volume ou en surface du matériaux. Ces mesures ou observation permettent de déterminer un endommagement éventuel et de déterminer si l'échantillon est apte ou non à supporter un flux laser d'une puissance surfacique déterminée.

Plusieurs modes de tirs lasers peuvent être utilisés. La norme NF EN ISO 11254 définit deux de ces modes qui sont le plus souvent utilisés. Selon un premier mode on augmente progressivement la puissance entre deux tirs sur un même point jusqu'à l'apparition d'un dommage. Ce mode présente l'avantage de limiter le nombre de points nécessaires pour obtenir une bonne statistique. Cependant, il génère un phénomène de conditionnement, dont l'origine est mal connue, qui a tendance à majorer la tenue au flux. Selon un second mode on effectue un tir unique par point à une puissance donnée puis on détermine le nombre de sites endommagés. Ceci permet de s'affranchir du phénomène de conditionnement mais demande un plus grand nombre de points de mesures. Le résultat dépend donc de nombreux paramètres (mode de mesure, longueur d'onde du laser, durée de l'impulsion, surface du spot...) qui sont parfois difficiles à maîtriser. Malgré la définition de quelques normes internationales, comme par exemple la norme NF EN ISO 11254 pour chacune des deux méthodes mentionnées ci dessus, les résultats de tenue au flux sont difficilement comparables d'un banc de test à l'autre. De plus il convient de bien comprendre qu'il sont toujours donnés en termes probabiliste.

Ces mesures sont destructives puisqu'il faut dépasser le seuil d'endommagement pour déterminer la tenue au flux.

Du fait que la méthode connue est destructrice, la valeur mesurée de la tenue au flux laser n'est la valeur réelle de tenue que si les composants optiques d'une série de production sont suffisamment homogènes entre eux pour que les essais effectués sur un échantillon soient représentatifs de ce que l'on obtient sur le reste des composants de la série. Il peut être nécessaire, par exemple lors de changement de lots de refaire des mesures de caractérisation.

BIGARRE J ET AL: "Trapping of electrical charges and laser damage", PROCEEDINGS OF THE SPIE - THE INTERNATIONAL SOCIETY FOR OPTICAL ENGINEERING, 2003, SPIE-INT. SOC. OPT. ENG, USA, vol. 4932, mai 2003 (2003-05), pages 258-267, ISSN: 0277-786X, décrit une méthode pour aider au choix du meilleur procédé de fabrication d'un composant optique destiné à être soumis à des flux lasers. La mesure se fait par cathodoluminescence, le composant recevant un faisceau électronique d'une énergie et d'une focalisation donnée. Plusieurs composants optiques issus de procédés de fabrication différents sont testés selon la même procédure et dans les mêmes conditions. Une valeur de cathodoluminescence plus faible indique alors implicitement une densité de défaut moins forte et donc un procédé de fabrication avantageux. L'article cité décrit aussi la possibilité de contrôler un état de surface en mesurant des densités de défauts sur la surface d'un composant optique à tester par cathodoluminescence.

**EXPOSÉ DE L'INVENTION**

Les défauts engendrés en sous-couche par les procédés de polissage des composants optiques produisent une baisse notable de la tenue au flux laser en absorbant fortement les photons et en piégeant des électrons et des trous. Ces défauts peuvent être des fissures débouchant à la surface d'incidence, des inclusions métalliques mais également des défauts ponctuels (lacunes d'oxygènes, rupture de liaisons, impuretés atomiques...). L'étude de tels défauts ponctuels est très délicate car la couche perturbée est extrêmement fine (de l'ordre de quelques micromètres) et les défauts ne sont pas observables par des techniques de mesures de surface. En détermination d'endommagement laser, quand on parle de la surface, il s'agit de la surface proprement dite et du volume qui se trouve immédiatement sous la surface, jusqu'à une profondeur qui peut atteindre quelques micromètres. La profondeur concernée est elle même une fonction de la densité surfacique de puissance du laser auquel la surface va être soumise.

Le but du procédé selon l'invention est de remédier à ces problèmes de détermination de la tenue au flux d'un composant ayant une surface d'incidence destinée à recevoir un rayonnement, en particulier laser, en effectuant des mesures non destructrices sur ce composant. Les mesures sont représentatives de la résistance du composant à l'endommagement lors de la réception d'un flux laser. Pour cela on étudie directement la surface d'incidence du rayonnement du composant lui-même et plus particulièrement les défauts qui sont à l'origine de l'apparition des dommages.

La présente invention a donc pour objet un procédé non destructif de vérification d'une tenue au flux laser d'un composant optique, à partir d'une mesure quantitative représentative de la densité des défauts d'une surface d'un matériau, cette surface constituant la surface d'incidence d'un flux laser appliqué au composant. Du fait que la mesure est non destructive, les composants peuvent être testés au besoin sur une base unitaire assurant ainsi une production de qualité. La mesure peut aussi être effectuée sur une base échantillonnée, sur chacun des lots de production selon des techniques statistiques du choix du pourcentage d'échantillons testés, en elles mêmes connues en contrôle qualité. La mesure de tenue n'est pas induite, comme dans l'art antérieur mais mesurée.

Selon l'invention on utilise un faisceau d'électrons d'énergie et d'intensité contrôlées pour exciter localement le matériau et on balaie la surface du composant à étudier avec ce faisceau d'électrons. La profondeur d'excitation dépend de l'énergie du faisceau d'électrons. C'est par ce moyen qu'il est possible de déterminer la répartition des défauts dans l'épaisseur du matériau au voisinage de la surface d'incidence.

Dans la zone excitée, l'interaction entre le faisceau d'électrons et les défauts ponctuels produit, selon un phénomène connu, une luminescence appelée cathodoluminescence, et de piégeage de charges électriques. Ce phénomène est expliqué comme suit. Après une période de forte mobilité, les charges excitées par le faisceau sont piégées au niveau de défauts ponctuels et produisent dans certains cas le phénomène de cathodoluminescence. Ce piégeage des électrons sur ces défauts crée des centres colorés qui émettent des photons dont la longueur d'onde dépend de la nature du défaut constituant le piège et de l'environnement du centre coloré.

De plus, le piégeage des charges électriques (électrons et trous) induit une variation de courant de masse et de l'émission électronique secondaire. Ceci permet de détecter la présence de défauts qui ne produisent pas de centres colorés et qui ne sont donc pas luminescents. Ce procédé permet également d'obtenir une mesure non destructrice et plus fine. La mesure des courants de masse permet de rendre quantitative la mesure des défauts, car elle permet de contrôler l'intensité du faisceau électronique au moment précis de la mesure.

Selon l'invention on mesure simultanément la cathodoluminescence à l'aide d'un spectromètre optique et le piégeage des charges électriques à partir des courants de masse.

Grâce au couplage des deux types de mesures, courant de masse et cathodoluminescence on contrôle parfaitement les conditions d'excitation du matériau et on prend en compte tous les défauts susceptibles de contribuer à l'apparition d'un dommage lorsque le matériau est soumis à un fort flux laser. Le couplage des deux mesures permet de réaliser des profils quantitatifs des taux de défauts dans les premiers micromètres du matériau ce qui ne peut être réalisé actuellement avec aucune autre technique.

Ainsi l'utilisation du procédé selon l'invention permet par exemple de sélectionner un procédé de fabrication comme étant a priori meilleur qu'un autre. Cela signifie que l'on peut déterminer que les composants fabriqués selon l'un des procédés auront une probabilité de résister à un flux laser supérieure à celle des composants obtenus par l'autre procédé de fabrication.

Ce procédé peut ainsi être appliqué pour l'optimisation des différentes phases de préparation d'un composant en vue d'améliorer sa tenue au flux : nature et procédé d'élaboration des matériaux, procédé de polissage et traitement de surface, conditionnement, guérison et stabilisation des dommages... Il peut également être utilisé pour suivre le vieillissement des composants en vue de leur maintenance préventive. Il peut également être utilisé pour le contrôle de qualité de composants optiques.

Ainsi selon une première application l'invention est relative à un procédé prédictif de choix d'un procédé de fabrication d'un composant optique destinés à être soumis à des flux lasers, le choix étant destiné à sélectionner parmi plusieurs procédés possibles de fabrication celui qui conduit à des composants ayant de meilleures tenues aux flux laser que ceux obtenus par les autres procédés possibles caractérisé en ce que

    a) on effectue un nombre entier N de mesures de cathodoluminescence sur des composants obtenus par un premier des procédés possibles de fabrication alors que le composant reçoit un faisceau électronique ayant une énergie déterminée, une focalisation à la surface du composant déterminée et une intensité déterminée contrôlée par une valeur d'un courant de masse mesurée sur le composant alors qu'il est soumis audit faisceau électronique,

    b) on calcule une valeur moyenne de cathodoluminescence sur les N mesures,

    c) On recommence les opérations a) et b) sur des composants obtenus par chacun des autres procédés possibles de fabrication,

    d) on décide que le procédé de fabrication le plus avantageux est celui pour lequel la valeur moyenne de cathodoluminescence est la plus faible.

Selon une variante du procédé, on recommence les étapes a) à c) pour différentes valeurs d'énergie du faisceau électronique, on établit un histogramme des valeurs moyennes de cathodoluminescence pour chacune des énergies,

on prend en compte dans le calcul de la valeur moyenne de cathodoluminescence une intégration des valeurs de cathodoluminescence sur les différentes énergies de faisceaux électroniques.

Dans une seconde application l'invention est relative à un procédé de contrôle d'un état d'une surface d'un composant optique destinée à être une surface d'incidence d'un faisceau laser, afin de déterminer si ladite surface a une densité de défaut qui est inférieure à une densité de défaut au delà de laquelle le composant optique est susceptible d'être endommagé par soumission à un flux laser présentant une puissance (densité de flux) au plus égale à un seuil prédéterminé pendant une durée maximum prédéterminée, caractérisé en ce que

a) On réalise des échantillons dudit composant optique par un même procédé de fabrication, en particulier en ce qui concerne l'état de ladite surface d'incidence et on les sépare en premiers et seconds échantillons,

b) dans une phase préalable d'étalonnage, on établit sur les premiers échantillons, une corrélation entre valeurs de cathodoluminescence obtenues dans des conditions de tirs électroniques déterminée, et tenue au flux laser des premiers échantillons, cette corrélation permettant de déterminer un ou plusieurs seuils de cathodoluminescence, chaque seuil correspondant à des conditions de tenue des premiers échantillons au flux laser, un composant présentant une valeur de cathodoluminescence inférieure à l'un des seuils étant acceptable pour les conditions de tenue ayant conduit à ce seuil, et rebuté pour ces conditions dans le cas contraire, lesdites conditions de tirs électroniques déterminées étant des conditions d'énergie et d'intensité de faisceau électronique déterminées, l'intensité du faisceau étant contrôlée par une valeur de courant de masse mesurée sur l'échantillon alors qu'il est soumis au dit faisceau électronique,

c) On mesure la valeur de cathodoluminescence produite sur un second échantillon par des tirs électroniques effectués dans les mêmes conditions qu'à l'étape b), on accepte le composant pour toutes les conditions de tenue correspondant à des seuils supérieurs à la valeur mesurée, on le rebute pour toutes les conditions de tenue correspondant à des seuil inférieurs à la valeur mesurée.

d) on recommence l'étape c) sur d'autres seconds échantillons sur une base unitaire ou par échantillonnage.

## BRÈVE DESCRIPTION DES DESSINS

L'invention sera maintenant décrite à l'aide des dessins annexés dans lesquels

La Figure 1 représente un exemple de dispositif permettant d'obtenir simultanément des mesures de cathodoluminescence, de courant d'émission électronique secondaire et de courant de masse.

La Figure 2 représente un exemple de spectre de cathodoluminescence,

Les Figures 3 et 4 sont des graphiques qui donnent la valeur de cathodoluminescence et donc de la densité des défauts correspondant aux longueurs d'onde 650 et 550 nm respectivement, en fonction de la profondeur pour les échantillons 1 et 2. Les courbes correspondant à l'échantillon 1 et à l'échantillon 2 sont en trait continu et en pointillés respectivement.

La figure 5 représente une droite de corrélation entre la tenue au flux laser d'un composant représenté en abscisse et la valeur de cathodoluminescence obtenue dans des conditions de tirs électroniques déterminées représentée en ordonnée.

## EXPOSÉ DÉTAILLÉ DE MODES DE RÉALISATION PARTICULIERS

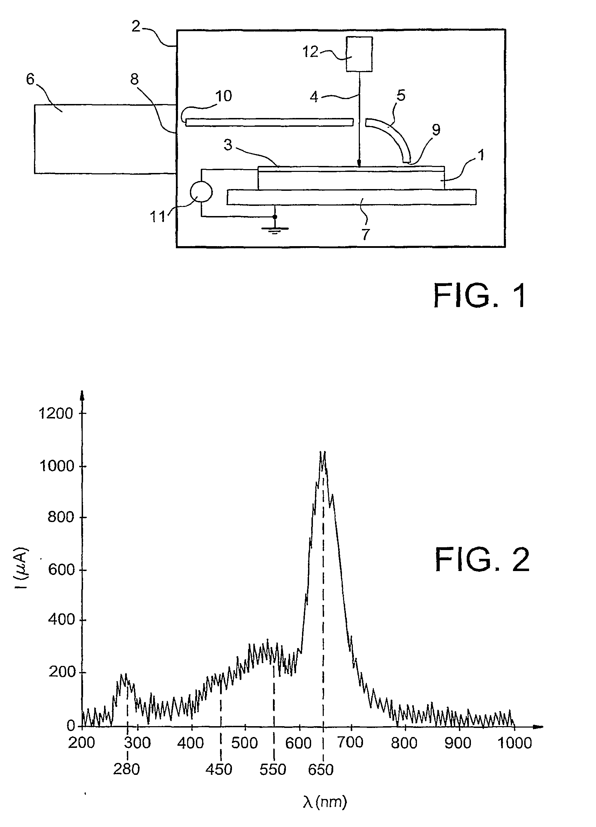

En liaison avec la figure 1, un dispositif selon l'invention comporte une enceinte à vide 2 constituant la chambre de mesure. Un canon à électrons 12 muni de moyens de contrôle de la direction d'émission du faisceaux, en eux mêmes connus est logé à l'intérieur de l'enceinte à vide 2. Il peut s'agir par exemple d'un microscope 12 électronique à balayage ou de tout autre dispositif possédant un canon à électrons. Un porte échantillon métallique 7 relié à la masse est disposé dans l'enceinte à vide 2 de telle sorte qu'il peut recevoir un faisceau d'électron 4 émis par le canon à électrons 12. L'enceinte à vide 2 contient aussi un dispositif 5 permettant à des photons émis par un composant 1 disposé sur le porte échantillon 7 de traverser une paroi 8 de l'enceinte à vide 2. Il peut s'agir par exemple d'un guide optique ayant une première extrémité 9 commandée par des moyens de balayage et une seconde extrémité 10 face à la paroi 8. Le dispositif selon l'invention est complété par un spectromètre optique 6 fonctionnant notamment dans l'UV et le visible entre 180 et 1000 nm. Le spectromètre optique 6 est disposé de façon à recevoir le rayonnement en provenance de la seconde extrémité 10 du guide optique 5. Enfin un galvanomètre 11 connecté d'une part à la masse et ayant un autre terminal raccordable à une surface conductrice d'un composant à mesurer complète le dispositif de mesure.

Le fonctionnement est le suivant.

La surface de l'échantillon est de préférence métallisée à l'aide d'un dépôt conducteur 3, par exemple de l'or, relié à la masse de manière à éliminer les charges superficielles. Ce dépôt conducteur 3 est destiné à permettre le déplacement des charges et donc la mesure du courant de déplacement par le galvanomètre 11. Le dépôt conducteur 3 n'est pas indispensable. Le matériau peut également être étudié non métallisé. Dans ce cas, on mesure une valeur représentative des charges piégées en mesurant un courant image dans le support métallique 7. Dans ce cas, il faut tenir compte de l'effet des charges qui diminue progressivement le potentiel de surface sous le faisceau. Si l'échantillon n'est pas métallisé, il est possible également d'utiliser une pression de quelques Pascals dans l'enceinte à vide de manière à neutraliser les charges de surface et éviter l'effet de charge.

On excite un volume à proximité de la surface d'incidence du composant ou d'un matériau à inclure dans le composant en injectant des électrons à l'aide du faisceau 4 produit par le canon 12. L'énergie, l'intensité et la focalisation de ce faisceau sont contrôlées. Pour que le procédé soit non destructif, il est nécessaire que le faisceau d'électrons ne crée pas de défauts supplémentaires. Pour cela, la densité de courant et la dose d'électrons introduite doivent être suffisamment faibles. La durée d'excitation doit être contrôlée de manière précise afin de maîtriser la quantité d'électrons injectés dans le matériau. Une mesure initiale des courants de masse permet de connaître parfaitement l'intensité du faisceau. Il est nécessaire de disposer d'un moyen précis de contrôle de la surface irradiée, c'est à dire de la focalisation du faisceau électronique, de manière à maîtriser la densité de courant. Ceci permet d'obtenir des mesures quantitatives et reproductibles.

Pendant l'injection des électrons, les photons émis sont recueillis par le dispositif 5 permettant aux photons de traverser la paroi 8 de la chambre 2. Les émissions photoniques sont envoyées sur un capteur photonique transformant les photons reçus en une valeur de charge ou de courant. Simultanément, le courant de masse est mesuré au niveau du porte échantillon 7 métallique relié à la masse.

En fin de mesure, on dispose pour chaque point de mesure sur le matériau, d'une valeur de l'émission photonique globale, et d'une valeur du courant de masse. La valeur du courant de masse est destinée à rétroagir sur le canon à électrons de façon à garder constante et reproductible pendant toute la durée des mesures l'intensité du faisceau électronique.

Un premier exemple d'emploi du procédé selon l'invention concerne l'effet du polissage sur la répartition des défauts dans l'épaisseur.

Deux échantillons de silice naturelle fondue ont été polis avec le même procédé de polissage. Le premier (échantillon 1) a été laissé tel quel et le second (échantillon 2) a subi une abrasion ionique supplémentaire de quelques micromètres. Ils ont été métallisés à l'aide d'un dépôt d'or. Des mesures de cathodoluminescence ont été réalisées à différentes énergies de faisceau. Chaque valeur correspond à une moyenne de cinq mesures réalisées sur des zones différentes.

La Figure 2 donne un spectre caractéristique de la cathodoluminescence de l'échantillon 1. On note la présence de quatre pics que l'on peut associer à trois types de défauts dans le matériau de l'échantillon 1. Les pics de cathodoluminescence sont à des longueurs d'ondes de 280, 450, 550, et le pic plus élevé à 650 nanomètres.

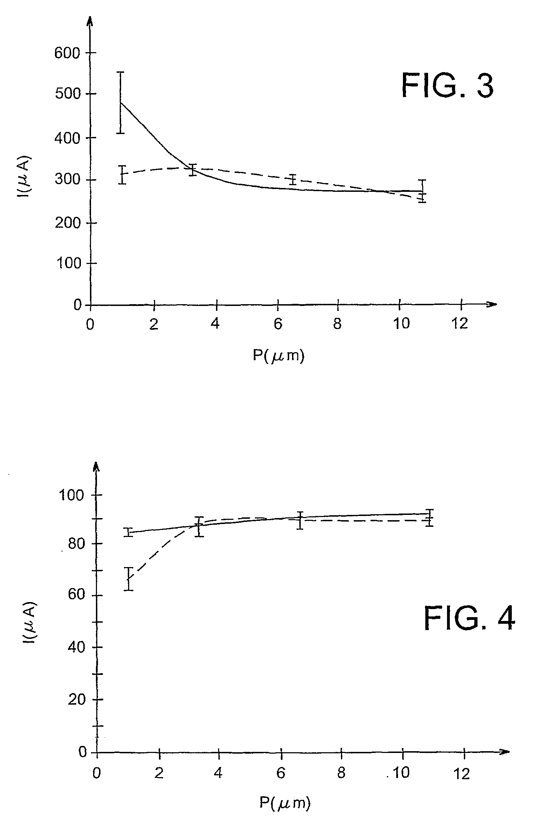

Les Figures 3 et 4 donnent la répartition des défauts correspondant aux longueurs d'onde 650 et 550 nm respectivement, en fonction de la profondeur pour les échantillons 1 et 2.

Il est connu que la profondeur maximale de pénétration des électrons peut être calculée à l'aide d'une loi empirique :

$$\text{Pour une énergie } E0 < 10 keV \qquad R = 90 \ \rho^{0,8} \ E_0^{13} \quad (1)$$

$$\text{Pour une énergie } E0 > 10 keV \qquad R = 45 \ \rho^{0,9} \ E_0^{17} \quad (2)$$

Dans les formules (1) et (2) ci dessus R est la profondeur de pénétration et p est la densité du matériau étudié. On voit ainsi que la profondeur de pénétration pourra être réglée en ajustant l'énergie du faisceau électronique. Cette énergie du faisceau électronique est ainsi représentative de la profondeur de la couche superficielle étudiée.

On note que le traitement supplémentaire d'abrasion ionique subie par l'échantillon 2, a permis de diminuer la densité des défauts qui avaient été générés près de la surface par le polissage.

Ceci se traduit par le fait que dans la figure 3, qui mesure la densité de défaut produisant un rayonnement important à une longueur d'onde de 650 nm, le courant de cathodoluminescence de l'échantillon 1 représenté par une courbe en trait continu se situe à une valeur plus élevée que celle de l'échantillon 2 représentée par une courbe en pointillés, pour des énergies du faisceau électronique correspondant à des profondeurs de sondage des défauts comprises entre environ 0,8 et 3 $\mu$m. Pour les profondeurs supérieures à 3 $\mu$m, les densités de défaut produisant la cathodoluminescence de 650 nm sont sensiblement les mêmes. Il en va de même sur la figure 4 pour les défauts produisant un rayonnement important à une longueur d'onde de 550 nm

Le procédé selon l'invention permet donc de mesurer l'effet du polissage et des traitements de post polissage sur la densité de défauts en sous couche et ainsi d'optimiser les procédés de polissage de manière à diminuer la densité de défauts générés. Il s'agit dans ce premier exemple d'application du procédé selon l'invention, de mesures prédictives de la tenue au flux laser. Ces mesures permettent de décider, sans avoir à effectuer de tirs laser et sans détruire les échantillons qu'un mode de réalisation est meilleur qu'un autre.

Un deuxième exemple d'application du procédé selon l'invention est relatif à l'établissement d'une corrélation entre l'intensité de cathodoluminescence et la tenue au flux laser.

Trois échantillons de silice naturelle fondue ont été réalisés. Chaque échantillon correspond à une qualité de polissage différente qui conduit à des tenues au flux a priori différente. Les valeurs de tenue au flux de chaque échantillon ont été déterminées par une technique destructive en effectuant des tirs laser. Ces mesures ont été effectuées selon des techniques connues.

Les échantillons ont ensuite été métallisés à l'aide d'un dépôt d'or. Des mesures de cathodoluminescence ont ensuite été effectuées comme indiqué plus haut. Chaque valeur de cathodoluminescence correspond à une moyenne de cinq mesures réalisées sur des zones différentes.

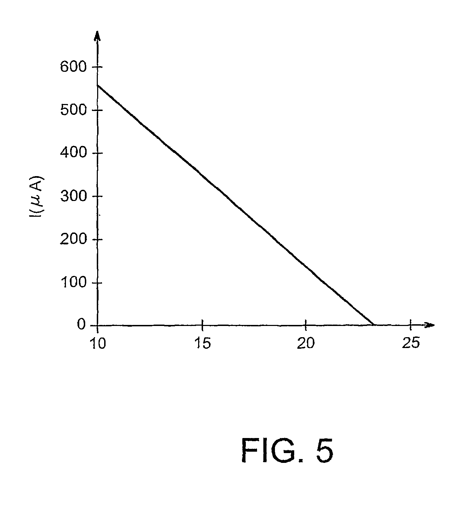

L'évolution de l'intensité de cathodoluminescence en fonction de la tenue au flux mesurée par endommagement laser est représentée sur la figure 5. Il s'agit d'une droite de pente négative. On voit que la tenue au flux est inversement proportionnelle à l'intensité de cathodoluminescence avec un bon coefficient de corrélation.

Un troisième mode de réalisation de l'invention sera maintenant décrit.

Dans ce mode le procédé selon l'invention est utilisé pour un contrôle de qualité d'une production d'un composant optique en particulier d'un état d'une surface de ce composant. Cette surface est destinée à être une surface d'incidence d'un faisceau laser. Il s'agit de déterminer si ladite surface a une densité de défaut qui est inférieure à une densité de défaut au delà de laquelle le composant optique est susceptible d'être endommagé par soumission à un flux laser présentant une puissance (densité de flux) au plus égale à un seuil prédéterminé pendant une durée maximum prédéterminée. Lorsqu'on dit susceptible d'être endommagée, cela signifie avec une probabilité supérieure à un seuil donné. Lorsqu'on dit pendant une durée maximum prédéterminée il peut s'agir aussi d'un nombre prédéterminé d'impulsions laser.

Selon ce mode de réalisation du procédé, on réalise un ensemble d'échantillons que l'on sépare en une première série d'échantillons qui serviront d'étalons et en une seconde série qui seront les composants de production. On soumet les premiers échantillons à des tirs laser, puis à des mesures de cathodoluminescence de façon à établir une corrélation entre la tenue à l'endommagement laser et la valeur de la cathodoluminescence. Cette première série d'échantillons est destinée à être sacrifiée puisqu'elle aura subi des dommages. Cette corrélation permet de définir une valeur seuil de cathodoluminescence en dessous de laquelle les composants sont acceptables et au dessus de laquelle ils doivent être rebutés. On effectue ensuite sur la seconde série d'échantillons destinés à la production des mesures de cathodoluminescence permettant de vérifier si l'échantillon doit ou non être rebuté.

La première étape du procédé qui consiste à établir une corrélation entre une valeur seuil de cathodoluminescence et une valeur de tenue au flux peut être effectuée des différentes manières connues. L'essentiel au cours de cette étape préalable est que l'on arrive à corréler une valeur seuil de densité de défaut et une valeur de cathodoluminescence.

Il va être décrit ci-après des manières et variantes de ces manières de réaliser l'étape préalable de corrélation, dans lesquelles sont réalisés des tirs lasers et des tirs de faisceaux électroniques pour mesurer la cathodoluminescence.

Les échantillons sont en général réalisés sur une galette de l'ordre d'une dizaine de cm de diamètre. Une pluralité de tirs lasers à des puissances différentes les unes des autres sont effectués en des zones espacées l'une de l'autre par exemple de 3 mm. Chaque zone de tir à un diamètre de l'ordre d'un ou quelques $\mu$m. Les zones de tirs laser et des zones sans tirs laser sont examinées pour déterminer des paramètres permettant de déterminer de façon en elle même connue une densité de défauts. En particulier il est examiné s'il y a ou non un endommagement rendant la zone examinée inapte à l'emploi prévu. Les tirs laser peuvent être effectués selon l'une ou l'autre des méthodes décrites ci-dessus en relation avec l'art antérieur. Les valeurs de puissance et la densité de défaut sur les zones n'ayant pas subi de tir et sur les zones ayant subi les tirs lasers sont enregistrées.

On métallise ensuite le matériau pour effectuer, comme indiqué plus haut, des mesures de cathodoluminescence sur des zones n'ayant pas été soumises aux tirs laser et sur les zones endommagées ayant été soumises à des tirs laser. Les mesures de cathodoluminescence sont effectuées pour une même énergie du faisceau électronique, et pour une même intensité contrôlée par la valeur du courant de masse.

Selon une première manière de réaliser la corrélation entre l'endommagement et la valeur de cathodoluminescence on trace la droite corrélant, l'énergie de cathodoluminescence et la densité de défaut. Cette droite de corrélation est semblable à celle représentée figure 5.

En fonction des valeurs de densité de défauts quantifiées par des valeurs de cathodoluminescence, on décide d'une valeur de densité de défauts inacceptable au delà de laquelle le composant présentant une densité de défaut et donc une valeur mesurée de cathodoluminescence supérieure à une valeur seuil sera rebuté.

Ainsi selon ce mode de réalisation du procédé,

On réalise des échantillons d'un composant optique par un même procédé de fabrication, en particulier en ce qui concerne l'état de la surface d'incidence,

On détermine sur des zones de premiers échantillons ayant été soumis à des tirs laser de puissances différentes les unes des autres et sur des zones n'ayant pas été soumises à des tirs, des densités de défauts,

On effectue sur des zones ayant été soumises aux tirs lasers et sur des zones n'y ayant pas été soumises, des tirs de faisceaux électroniques d'intensité contrôlées par une mesure du courant de masse, les différents tirs électroniques ayant une même énergie électronique et une même intensité, et l'on mesure les valeurs de cathodoluminescence,

On trace une droite corrélant la densité de défaut et la valeur de cathodoluminescence,

On détermine à l'aide de la droite et des effets des densités de défauts sur l'aptitude du composant à tenir aux flux laser auxquels il doit être soumis, un seuil ou plusieurs seuils de défaut et corrélativement des seuils de cathodoluminescence au delà duquel le composant doit être rebuté pour une application donnée.

Selon une variante de la première manière de réalisation de la phase préalable de détermination d'une valeur seuil de cathodoluminescence, on détermine en outre une valeur d'énergie du faisceau électronique qui sera la plus appropriée pour effectuer les mesures.

Il a été vu plus haut que les inventeurs ont déterminé qu'il existait une relation linéaire entre la valeur de cathodoluminescence, elle même représentative de la densité de défaut, et la tenue au flux laser. Un exemple d'une telle relation est montrée sur le graphique déjà commenté de la figure 5. On voit sur ce graphique que la tenue au flux laser, portée en abscisse décroît proportionnellement à la valeur de la cathodoluminescence portée en ordonnée. Ce graphique est tracé pour une profondeur donnée, pour un matériau donné. Il a également été vu plus haut qu'il existe une relation entre l'énergie du faisceau électronique et la profondeur d'investigation des défauts. De ce fait, pour différentes énergies du faisceau électronique, les conditions d'intensité du faisceau et de focalisation sur le matériau étant par ailleurs identiques, on obtient différente droites, chacune ayant une pente. Selon cette variante de réalisation, on répète les mesures de cathodoluminescence ayant conduit à la corrélation linéaire entre la densité de défaut et la valeur de cathodoluminescence. On obtient ainsi plusieurs droites de corrélation, chacune correspondant à une énergie du faisceau électronique. Selon cette variante, on détermine la valeur seuil à partir de la droite de corrélation correspondant à l'énergie de faisceau électronique pour laquelle la pente permet une bonne discrimination de la tenue au flux en fonction de la densité de défauts. Il s'agit de la droite de plus forte pente, en valeur absolue de pente, la valeur de la pente étant négative.

Une seconde manière de réaliser l'étape préalable de corrélation entre une valeur seuil de cathodoluminescence et une valeur seuil supérieure de densité de défaut acceptable, sera maintenant décrite.

b21) On soumet la surface d'incidence des premiers échantillons dudit composant optique pris parmi les échantillons réalisés à l'étape a) à un tir d'un faisceaux électronique ayant une énergie et une intensité connues, l'intensité étant contrôlée par une mesure du courant de masse dudit échantillon soumis au tir dudit faisceaux électronique,

b22) Pendant que chacun desdits composants optiques est soumis au tir du faisceau électronique on mesure, outre le courant de masse pour l'appliquer au contrôle instantané de l'intensité du faisceau électronique, l'intensité de cathodoluminescence dudit composant optique,

b23) On enregistre pour chacun des échantillons traités par un faisceau électronique de même énergie et même intensité la valeur de l'intensité de cathodoluminescence,

b24) On classe les premiers échantillons par ordre croissant de densité de défauts, les échantillons ayant le moins de défauts étant ceux pour lesquels la valeur de l'intensité de cathodoluminescence est la plus faible,

b25) On soumet les premiers échantillons à des flux laser ayant la puissance maximum seuil pour laquelle les composants sont prévus, et pour une durée égale à la durée maximum pendant laquelle les composants optiques doivent recevoir ce flux sans subir de dommage,

b26) on relève les N intensités de cathodoluminescence les plus élevées des composants soumis au flux à l'étape b25) et qui n'ont pas subi de dommages inacceptables et on décide qu'une intensité de cathodoluminescence maximum calculée à partir d'une combinaison linéaire de ces N intensités de cathodoluminescence est l'intensité de cathodoluminescence maximum mesurée acceptable pour lesdits composants optiques.

Dans un mode de réalisation permettant un tri sélectif des composants en fonction de différents usages du composant, on détermine plusieurs seuils de cathodoluminescence. Ainsi un premier seuil, le plus petit de valeur de cathodoluminescence correspond à des composants ayant la densité de défaut la plus petite. Les composants ayant une valeur de cathodoluminescence inférieure à ce premier seuil pourront être classés dans une première catégorie de qualité. Les composants ayant une valeur de cathodoluminescence supérieure à ce premier seuil mais inférieure à un second seuil pourront être classés dans une seconde catégorie et ainsi de suite jusqu'à un nombre entier P de catégories de qualités de composant.

Il convient de noter que chacun des ensembles de mesures permettant de déterminer un point dans l'espace - énergie de cathodoluminescence, tenue au flux - est effectué sur un grand nombre de points du matériau, les points de l'espace étant ainsi représentatifs de valeurs moyennes.

Un traitement statistique est ensuite effectué pour déterminer une valeur moyenne de puissance pour laquelle on à une probabilité d'endommagement supérieure à un seuil prédéterminé. Ainsi lorsqu'il est parlé d'un seuil de puissance laser pour lequel il y a endommagement, il convient de bien comprendre qu'il s'agit d'un seuil pour lequel la probabilité d'endommagement est supérieure à un seuil prédéterminé. Naturellement selon la certitude de non endommagement que l'on veut avoir, le seuil probabiliste aura une valeur plus ou moins élevée.

**Revendications**

1. Procédé prédictif de choix d'un procédé de fabrication d'un composant optique destiné à être soumis à des flux lasers, le choix étant destiné à sélectionner parmi plusieurs procédés possibles de fabrication celui qui conduit à des composants ayant de meilleures tenues aux flux laser que ceux obtenus par les autres procédés possibles **caractérisé en ce que**

   a) on effectue un nombre entier N de mesures de cathodoluminescence sur des composants obtenus par un premier des procédés possibles de fabrication alors que le composant reçoit un faisceau électronique ayant une énergie déterminée, une focalisation à la surface du composant déterminée et une intensité déterminée contrôlée par une valeur d'un courant de masse mesurée sur le composant alors qu'il est soumis audit faisceau électronique,
   b) on calcule une valeur moyenne de cathodoluminescence sur les N mesures,
   c) on recommence les opérations a) et b) sur des composants obtenus par chacun des autres procédés possibles de fabrication,
   d) on décide que le procédé de fabrication le plus avantageux est celui pour lequel la valeur moyenne de cathodoluminescence est la plus faible.

2. Procédé selon la revendication 1 **caractérisé en ce qu'**on recommence les étapes a) à c) pour différentes valeurs d'énergie du faisceau électronique, et **en ce qu'**on établit un histogramme des valeurs moyennes de cathodoluminescence pour chacune des énergies,
   on prend en compte dans le calcul de la valeur moyenne de cathodoluminescence une intégration des valeurs de cathodoluminescence sur les différentes énergies de faisceaux électroniques.

3. Procédé de contrôle d'un état d'une surface d'un composant optique destinée à être une surface d'incidence d'un faisceau laser, afin de déterminer si ladite surface a une densité de défaut qui est inférieure à une densité de défaut au delà de laquelle le composant optique est susceptible d'être endommagé par soumission à un flux laser présentant une puissance au plus égale à un seuil prédéterminé pendant une durée maximum prédéterminée, **caractérisé en ce que**

   a) on réalise des échantillons dudit composant optique par un même procédé de fabrication, en particulier en ce qui concerne l'état de ladite surface d'incidence et on les sépare en premiers et seconds échantillons,
   b) dans une phase préalable d'étalonnage, on établit sur les premiers échantillons, une corrélation entre valeurs de cathodoluminescence obtenues dans des conditions de tirs électroniques déterminées, et tenue au flux laser des premiers échantillons, cette corrélation permettant de déterminer un ou plusieurs seuils de cathodoluminescence, chaque seuil correspondant à des conditions de tenue des premiers échantillons au flux laser, un composant présentant une valeur de cathodoluminescence inférieure à l'un des seuils étant acceptable pour les conditions de tenue ayant conduit à ce seuil, et rebuté pour ces conditions dans le cas contraire, lesdites conditions de tirs électroniques déterminées étant des conditions d'énergie et d'intensité de faisceau électronique déterminées, l'intensité du faisceau étant contrôlée par une valeur de courant de masse mesurée sur l'échantillon alors qu'il est soumis au dit faisceau électronique,
   c) on mesure la valeur de cathodoluminescence produite sur un second échantillon par des tirs électroniques effectués dans les mêmes conditions qu'à l'étape b), on accepte le composant pour toutes les conditions de tenue correspondant à des seuils supérieurs à la valeur mesurée, on le rebute pour toutes les conditions de tenue correspondant à des seuils inférieurs à la valeur mesurée,
   d) on recommence l'étape c) sur d'autres seconds échantillons sur une base unitaire ou par échantillonnage.

4. Procédé selon la revendication 3 **caractérisé en ce que** pour la réalisation de l'étape b)

   b11) on détermine sur des zones des premiers échantillons ayant été soumis à des tirs laser de puissances différentes les unes des autres et sur des zones n'ayant pas été soumises à des tirs, des densités de défauts,

b12) on effectue sur les zones ayant été soumises aux tirs lasers et sur les zones n'y ayant pas été soumises, des tirs de faisceaux électroniques selon lesdites conditions déterminées, les différents tirs électroniques ayant une même énergie électronique et une même intensité, et l'on mesure les valeurs de cathodoluminescence,

b13) on trace une droite corrélant la densité de défaut et la valeur de cathodoluminescence,

b14) on détermine à l'aide de la droite et des effets des densités de défauts sur l'aptitude du composant à tenir aux flux laser auxquels il doit être soumis, un seuil ou plusieurs seuils de défaut et corrélativement de seuils de cathodoluminescence au delà duquel le composant doit être rebuté pour une application donnée.

**5.** Procédé selon la revendication 4 **caractérisé en ce que** pour la réalisation de l'étape b)

b15) on recommence les étapes b12 et b13 pour différentes valeurs d'énergie du faisceau électronique,

et **en ce que** à l'étape b14)
on détermine la valeur seuil à partir de la droite de plus forte pente, en valeur absolue.

**6.** Procédé selon la revendication 3 **caractérisé en ce que** pour la réalisation de l'étape b)

b21) on soumet une surface d'incidence de premiers échantillons dudit composant optique à des tirs de faisceaux électroniques selon lesdites conditions de tir déterminées, les différents tirs électroniques ayant des énergies différentes et une même intensité connue,

b22) pendant que chacun desdits composants optiques est soumis au tir du faisceau électronique on mesure, outre le courant de masse pour l'appliquer au contrôle instantané de l'intensité du faisceau électronique, l'intensité de cathodoluminescence dudit composant optique,

b23) on enregistre pour chacun des échantillons traités par un faisceau électronique de même énergie et même intensité la valeur de l'intensité de cathodoluminescence,

b24) on classe les premiers échantillons par ordre croissant de densité de défauts, les échantillons ayant le moins de défauts étant ceux pour lesquels la valeur de l'intensité de cathodoluminescence est la plus faible,

b25) on soumet les premiers échantillons à des flux laser ayant la puissance maximum seuil pour laquelle les composants sont prévus, et pour une durée égale à la durée maximum pendant laquelle les composants optiques doivent recevoir ce flux sans subir de dommage,

b26) on relève les N intensités de cathodoluminescence les plus élevées des composants soumis au flux à l'étape b25) et qui n'ont pas subi de dommages et on décide qu'une intensité de cathodoluminescence maximum calculée à partir d'une combinaison linéaire de ces N intensités de cathodoluminescence est l'intensité de cathodoluminescence maximum mesurée acceptable pour lesdits composants optiques.

**Claims**

**1.** A predictive choice process of a manufacturing process of an optical component intended to be subjected to laser fluxes, the choice being intended to select from among several possible manufacturing processes that which results in components having better laser flux behaviour than those obtained by the other possible processes, **characterised in that**

a) a number N of measurements of cathodoluminescence are made on components obtained by a first of the possible manufacturing processes, while the component receives an electronic beam having a determined energy, a determined focusing at the surface of the component and a determined intensity controlled by a value of a ground current measured on the component, while it is being submitted to said electronic beam,

b) an average cathodoluminescence value on the N measurements is calculated,

c) operations a) and b) on components obtained by each of the other possible manufacturing processes are repeated,

d) the most advantageous manufacturing process is decided as the one for which the average cathodoluminescence value is the lowest.

**2.** The process as claimed in Claim 1, **characterised in that** steps a) to c) for different energy values of the electronic beam are repeated, and **in that** a histogram of the average cathodoluminescence values for each of the energies is established,

in calculating the average cathodoluminescence value an integration of the cathodoluminescence values on the different energies of electronic beams is taken into account.

3. A process for controlling a state of a surface of an optical component intended to be a surface of incidence of a laser beam, so as to determine whether said surface has a default density which is less than a default density beyond which the optical component is likely to be damaged by submission to a laser flux having a power (flux density) at most equal to a predetermined threshold for a maximum predetermined duration, **characterised in that**

a) samples of said optical component are produced by the same manufacturing process, in particular as concerns the state of said incident surface, and they are separated into first and second samples,

b) in a preliminary calibration phase a correlation between cathodoluminescence values obtained in conditions of determined electronic shots, and laser flux behaviour of the first samples is made on the first samples, this correlation helping to determine one or more cathodoluminescence thresholds, each threshold corresponding to behaviour conditions of the first samples to laser flux, a component having a cathodoluminescence value less than one of the thresholds being acceptable for the behaviour conditions having resulted in this threshold, and rejected for these conditions in the opposite case,

c) the cathodoluminescence value produced on a second sample is measured by electronic shots taken in the same conditions as in step b), the component is accepted for all the behaviour conditions corresponding to thresholds greater than the value measured, and is rejected for all the behaviour conditions corresponding to thresholds less than the value measured.

d) step c) is repeated on other second samples on a specific basis or by sampling.

4. The process as claimed in Claim 3, **characterised in that** to carry out step b)

b11) fault densities are determined on zones of the first samples having been subjected to laser shots of powers different to one another and on zones not having been subjected to shots,

b12) shots of electronic beams of intensity controlled by measuring the ground current, the different electronic shots having the same electronic energy and the same intensity, are made on the zones having been subjected to laser shots and on the zones not having been subjected thereto, the cathodoluminescence values are measured,

b13) a line is traced correlating the default density and the cathodoluminescence value,

b14) a threshold or several fault thresholds, and correlatively cathodoluminescence thresholds beyond which the component must be rejected for a given application, is determined by means of the line and the effects of the fault densities on the aptitude of the component to withstand the laser flux to which it must be subjected.

5. The process as claimed in Claim 4, **characterised in that** to carry out step b)

b15) steps b12 and b13 are repeated for different energy values of the electronic beam,
and **in that** in step b14)
the threshold value is determined from the line of greatest slope, in absolute value.

6. The process as claimed in Claim 3, **characterised in that** to carry out step b)

b21) a surface of incidence of first samples of said optical component is subjected to shots of electronic beams having different energies and the same known intensity, the intensity being controlled by measuring the ground current of said sample subjected to the shot of said electronic beams,

b22) while each of said optical components is subjected to the shot of an electronic beam, apart from the ground current to be applied to the instantaneous control of the intensity of the electronic beam, the cathodoluminescence intensity of said optical component is measured,

b23) the value of the cathodoluminescence intensity is recorded for each of the samples processed by an electronic beam of the same energy and same intensity,

b24) the first samples are sorted by ascending order of default densities, the samples having the fewest faults being those for which the value of the cathodoluminescence intensity is the lowest,

b25) the first samples are subjected to laser flux having the maximum threshold power for which the components are provided, and for a duration equal to the maximum duration during which the optical components must receive this flux without undergoing any damage,

b26) the N highest cathodoluminescence intensities are taken from the components subjected to flux at step b25) and which have not undergone any damage, and it is decided that a maximum cathodoluminescence intensity calculated from a linear combination of these N cathodoluminescence intensities is the intensity of maximum acceptable cathodoluminescence measured for said optical components.

**Patentansprüche**

1. Prädiktionsverfahren zur Auswahl eines Herstellungsverfahrens eines Laserflüssen ausgesetzten optischen Bauteils, wobei die Auswahl dazu dient, unter mehreren möglichen Herstellungsverfahren dasjenige auszuwählen, das zu Bauteilen führt, die bessere Beständigkeiten gegenüber Laserfluss aufweisen als die durch die anderen möglichen Verfahren hergestellten,
**dadurch gekennzeichnet, dass**

   a) man eine ganzzahlige Anzahl von N Kathodolumineszenz-Messungen an Bauteilen, hergestellt durch ein erstes der möglichen Fertigungsverfahren, durchführt, während das Bauteil einem Elektronenstrahl mit einer bestimmten Energie, einer Fokussierung auf die Oberfläche des bestimmten Bauteils und einer bestimmten Intensität ausgesetzt ist, kontrolliert bzw. gesteuert durch einen auf dem Bauteil gemessenen Wert eines Massenstroms, während es dem genannten Elektronenstrahl ausgesetzt ist,
   b) man einen mittleren Kathodolumineszenz-Wert der N Messungen berechnet,
   c) man die Operationen a) und b) mit Bauteilen wiederholt, die durch jedes der anderen möglichen Fertigungsverfahren hergestellt wurden,
   d) man entscheidet, dass das vorteilhafteste Fertigungsverfahren dasjenige ist, bei dem der mittlere Kathodolumineszenz-Wert der kleinste ist.

2. Verfahren nach Anspruch 1, **dadurch gekennzeichnet, dass** man die Schritte a) bis c) mit verschiedenen Energiewerten des Elektronenstrahls wiederholt, und **dadurch**, dass man für jede der Energien ein Histogramm der mittleren Kathodolumineszenz-Werte erstellt,
man in der Berechnung des mittleren Kathodolumineszenz-Wertes eine Integration der Kathodolumineszenz-Werte der verschiedenen Elektronenstrahlenergien erfasst.

3. Prüfverfahren eines Zustands einer Oberfläche eines optischen Bauteils, die dazu bestimmt ist, eine Einfalloberfläche eines Laserstrahls zu sein, um zu bestimmen, ob die genannte Oberfläche eine Fehlerdichte aufweist, die niedriger als eine Fehlerdichte ist, jenseits der das optische Bauteil durch einen Laserstrahl beschädigt werden könnte, dessen Leistung höchstens einem vorbestimmten Schwellenwert entspricht und dem es während einer vorbestimmten maximalen Dauer ausgesetzt wird,
**dadurch gekennzeichnet, dass**

   a) man Muster des genannten optischen Bauteils durch dasselbe Fertigungsverfahren herstellt, insbesondere in Bezug auf den Zustand der genannten Einfalloberfläche, und sie in erste und zweite Muster trennt,
   b) man in einer vorausgehenden Eichphase bei den ersten Mustern eine Korrelation zwischen Kathodolumineszenz-Werten, erhalten unter bestimmten Elektronenschussbedingungen, und der Laserflussbeständigkeit der ersten Muster erstellt, wobei diese Korrelation ermöglicht, einen oder mehrere Kathodolumineszenz-Schwellenwerte zu bestimmen, jeder Schwellenwert Laserfluss-Beständigkeitsbedingungen der ersten Muster entspricht, ein Bauteil einen Kathodolumineszenz-Wert aufweist, der niedriger ist als einer der Schwellenwerte, die akzeptabel sind für die Beständigkeitsbedingungen, die zu diesem Schwellenwert geführt haben, und im konträren Fall für diese Bedingungen inakzeptabel sind, wobei die genannten bestimmten Elektronenschussbedingungen bestimmte Elektronenstrahlenergie- und -intensitätsbedingungen sind und die Intensität des Strahls durch einen auf dem Muster gemessenen Massenstromwert kontrolliert wird, während es dem genannten Elektronenstrahl ausgesetzt ist,
   c) man den Wert der auf einem zweiten Muster durch Elektronenschüsse erzeugten Kathodolumineszenz misst, die unter denselben Bedingung wie in Schritt b) durchgeführt werden, man das Bauteil für alle Beständigkeitsbedingungen mit höheren Schwellenwerten als dem gemessenen Wert akzeptiert, und für alle Beständigkeitsbedingungen mit niedrigeren Schwellenwerten als dem gemessenen Wert nicht akzeptiert,
   d) man den Schritt c) mit anderen zweiten Mustern wiederholt, auf einer unitären Basis oder durch Stichproben.

4. Verfahren nach Anspruch 3, **dadurch gekennzeichnet, dass** - zur Realisierung des Schritts b)

   b11) man in Zonen der ersten Muster, die Laserschüssen unterschiedlicher Leistungen ausgesetzt worden sind, und in Zonen, die keinen Laserschüssen ausgesetzt worden sind, Fehlerdichten bestimmt,
   b12) man in Zonen, die Laserschüssen ausgesetzt worden sind, und in Zonen, die nicht ausgesetzt worden sind, Elektronenstrahlschüsse gemäß den bestimmten genannten Bedingungen realisiert, wobei die verschiedenen Elektronenschüsse eine selbe Elektronenenergie und eine selbe Intensität haben, und man die Kathodolumineszenz-Werte misst,

b13) man eine die Fehlerdichte und den Kathodolumineszenz-Wert korrelierende Gerade zieht,

b14) man mit Hilfe der Geraden und der Auswirkungen der Fehlerdichten auf die Fähigkeit des Bauteils, dem Laserfluss standzuhalten, dem es ausgesetzt werden muss, einen oder mehrere Fehlerschwellenwerte und korrelativ Kathodolumineszenz-Schwellenwerte bestimmt, jenseits dem bzw. denen das Bauteil für eine bestimmte Anwendung nicht akzeptabel ist.

5. Verfahren nach Anspruch 4, **dadurch gekennzeichnet, dass** - zur Realisierung des Schritts b)

b15) man die Schritte b12 und b13 mit verschiedenen Energiewerten des Elektronenstrahls wiederholt

und **dadurch**, dass - in Schritt b14)

man den Schwellenwert aufgrund der Geraden mit der stärksten Neigung bestimmt, als Absolutwert.

6. Verfahren nach Anspruch 3, **dadurch gekennzeichnet, dass** - zur Realisierung des Schritts b)

b21) man eine Einfalloberfläche erster Muster des genannten optischen Bauteils Elektronenstrahlschüssen gemäß den bestimmten genannten Bedingungen aussetzt, wobei die verschiedenen Elektronenschüsse unterschiedliche Energien und eine selbe bekannte Intensität haben,

b22) man - währenddem jedes der genannten optischen Bauteile dem Elektronenstrahlbeschuss ausgesetzt ist - außer dem zur Momentankontrolle der Intensität des Elektronenstrahls angewendeten Massenstrom die Intensität der Kathodolumineszenz des genannten optischen Bauteils misst,

b23) man für jedes der mit einem Elektronenstrahl derselben Energie und derselben Intensität behandelten Muster den Wert der Kathodolumineszenz-Intensität speichert,

b24) man die ersten Muster in aufsteigender Fehlerdichte-Reihenfolge klassiert, wobei die Muster mit den wenigsten Fehlern diejenigen sind, deren Kathodolumineszenz-Intensitätswert der kleinste ist,

b25) man die ersten Muster Laserflüssen mit der maximalen Schwellenleistung aussetzt, für die die Muster vorgesehen sind, und dies während einer Dauer gleich der maximalen Dauer, während der die optischen Bauteile diesen Fluss aushalten müssen, ohne Schaden zu erleiden,

b26) man die N höchsten Kathodolumineszenz-Intensitäten der dem Fluss in Schritt b25) ausgesetzten Bauteile feststellt, die keine Schäden erlitten haben, und man entscheidet, dass eine Kathodolumineszenz-Intensität, berechnet aufgrund einer linearen Kombination dieser N Kathodolumineszenz-Intensitäten, die maximale gemessene für die genannten optischen Bauteile akzeptable Kathodolumineszenz-Intensität ist.

# FIG. 1

# FIG. 2

FIG. 3

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BIGARRE J et al.** Trapping of electrical charges and laser damage. *PROCEEDINGS OF THE SPIE - THE INTERNATIONAL SOCIETY FOR OPTICAL ENGINEERING,* Mai 2003, vol. 4932, ISSN 0277-786X, 258-267